# EUROPEAN PATENT SPECIFICATION

(11) **EP 2 047 628 B1**
(45) Date of publication and mention of the grant of the patent: **06.01.2016**
(21) Application number: 07859556.8
(22) Date of filing: 19.07.2007
(51) Int. Cl.: H04J 3/14, H04L 12/54, H04L 12/70, H04L 12/709

(54) **SYSTEM AND METHOD FOR MAINTAINING STATE SYNCHRONIZATION IN REDUNDANT IMA GROUP PROTECTION SWITCHING**
SYSTEM UND VERFAHREN ZUR AUFRECHTERHALTUNG DER STATUSSYNCHRONISATION IN EINER REDUNDANTEN IMA-GRUPPEN-SCHUTZSCHALTUNG
SYSTÈME ET PROCÉDÉ DE MAINTIEN DE SYNCHRONISATION D'ÉTAT EN COMMUTATION DE PROTECTION REDONDANTE DE GROUPE D'ARCHITECTURE DE GESTION INDÉPENDANTE

(30) Priority: 20.07.2006 US 489671
(43) Date of publication of application: 15.04.2009
(73) Proprietor: ALCATEL LUCENT, 92100 Boulogne-Billancourt (FR)
(72) Inventor: LAFLEUR, Daniel, Kanata, O K2K 3A6 (CA); WISENER, James, Ottawa, Ontario K1K 1V2 (CA); PRABHU, Vinod, Kanata, K2K 3K7 (CA)
(74) Representative: Wetzel, Emmanuelle
(86) International application number: PCT/IB2007/055360
(87) International publication number: WO 2008/041212

(56) References cited:
- EP-A- 1 056 309
- "ATM protection switching; I.630 (02/99)" ITU-T STANDARD IN FORCE (I), INTERNATIONAL TELECOMMUNICATION UNION, GENEVA, CH, no. I.630 (02/99), 1 February 1999 (1999-02-01), XP017401745
- "Inverse Multiplexing for ATM (IMA) Specification Version 1.1" ATM FORUM TECHNICAL COMMITTEE, XX, XX, 1 March 1999 (1999-03-01), pages 1-36, XP002261777

## Description

### FIELD OF THE INVENTION

The invention relates to the application of redundant protection switching, and more particularly to a system and method for maintaining state synchronization in redundant protection switching to an IMA (inverse multiplexing for ATM) group.

### BACKGROUND OF THE INVENTION

In providing communications services to customers, service providers attempt to ensure that services are delivered with minimal loss of data and with minimal interruption. A well known approach to ensuring data transfer services is redundant protection switching or automatic protection switching (APS). In SONET/SDH, APS 1+1 is typically used for protection switching between line cards of the same box. In general redundant protection switching can be configured to switch signals traversing one network resource to a different route to traverse another similar network resource.

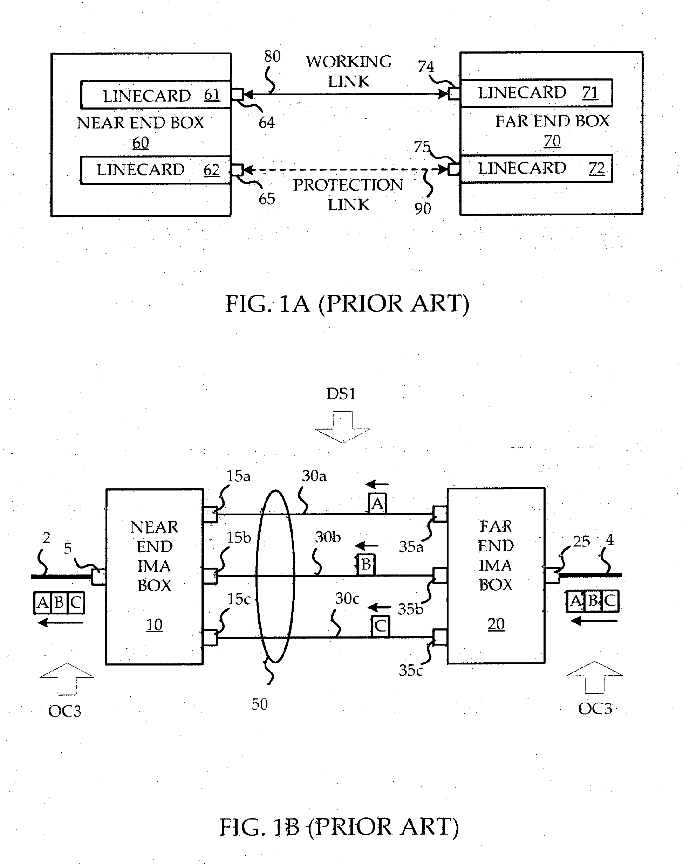

Referring now to Figure 1A, a known implementation of APS 1+1 is discussed. A near end (NE) box 60 having a first working line card 61 whose traffic is to be protected, has an NE working port 64 which is coupled via a bi-directional working link 80 to a far end (FE) working port 74 of an FE box 70 having a second working line card 71. The NE box 60 is also coupled from a first protection line card 62 through an NE protection port 65 over a bi-directional protection link 90 to an FE protection port 75 of a second protection line card 72 of the FE box 70. In this configuration, the NE box 60 is said to be protected by an APS group having a working circuit made up of the first working line card 61, the NE working port 64, the working link 80, the FE working port 74, and the second working line card 71, and having a protection circuit made up of the first protection line card 62, the NE protection port 65, the protection link 90, the FE protection port 75, and the second protection line card 72.

Typically the working circuit carries the data traffic which is to be protected. When a circuit is carrying the data traffic, it is said to be active, and when it is not carrying the traffic it is said to be inactive. For consistency the link and ports of an active circuit are referred to as being active, and the link and ports of an inactive circuit are referred to as being inactive. In automatic protection switching the working circuit is defined as the circuit which is typically active when there is no failure.

In the event of a failure or degradation of the signal of the active circuit, which may be caused by failure or degradation of the active link or either active ports, APS 1+1 switches the data traffic from traversing the failed or degraded circuit to traversing the other circuit. The other circuit becomes active and the failed or degraded circuit becomes the inactive circuit.

The APS 1+1 architecture also allows for the protection circuit and the working circuit to be configured to end at two different FE boxes. Such a known configuration protects against nodal or router failures in addition to link and circuit failures.

It should be noted that typically in the prior art, no signals are exchanged over the protection circuit until a switchover occurs. As such the protection and working circuit are not state synchronized. On a protection switchover the working circuit becomes inactive and the protection circuit becomes active without either circuit having any information regarding the particular operational state of the other besides its activity or inactivity.

Referring now to Figure 1B, a known IMA group according to the IMA AF-PHY-0086.000 and AF-PHY-0086.001 ATM forum specifications is discussed. IMA provides at one end of an IMA virtual link, inverse multiplexing of an ATM stream over multiple physical links and at the other end of the IMA virtual link, multiplexing and reassembly of that ATM stream. Typically a service provider requiring data rates sub-DS3 but greater than DS1 will employ IMA over a number of DS1 links. Inverse multiplexing over ATM provides data rate flexibility and hides the use of multiple physical links from the higher level network layers. As shown in Figure 1B, an ATM stream over a large bandwidth physical link, for example OC3, can be split to traverse a multitude of lower bandwidth links such as DS1 and reassembled for transmission over another OC3 link.

An ATM stream traversing a first OC3 link 4 is shown as being carried over a set of DS1 links 30a, 30b, 30c configured in an IMA group 50 to traverse a second OC3 link 2. The first OC3 link 4 is coupled via a first bidirectional OC3 port 25 of a far end (FE) IMA box 20. The FE IMA box 20 has a first DS1 port 35a, a second DS1 port 35b, and a third DS1 port 35c coupled to a first DS1 link 30a, a second DS1 link 30b and a third DS1 link 30c respectively. The first, second and third DS1 links 30a, 30b, 30c collectively make up the IMA group 50. The first, second, and third DS1 links 30a, 30b, 30c are coupled respectively to a fourth DS1 port 15a, a fifth DS1 port 15b, and a sixth DS1 port 15c of a near end (NE) IMA box 10. The near end IMA box 10 is coupled via a second OC3 port 5 to the second OC3 link 2. It should be noted that the DS1 links 30a, 30b, 30c are bidirectional as well as are the OC3 links 2,4.

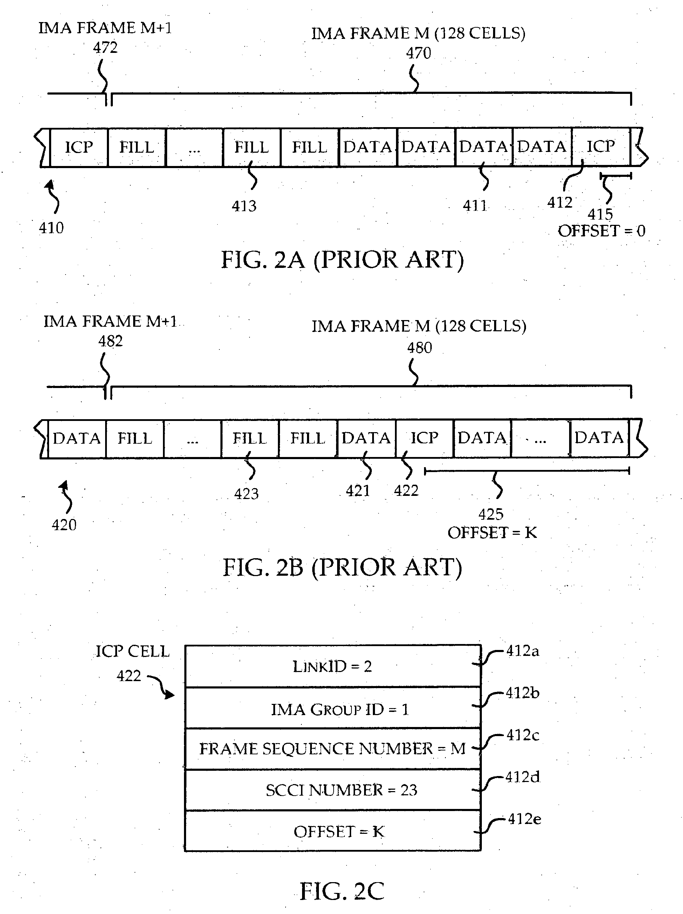

When a stream of ATM cells is input along the first OC3 link 4 they enter the FE IMA box 20 through the first OC3 port 25. For illustration three ATM cells A, B, and C are shown. The FE IMA box 20 distributes the cells in a round robin fashion for transmission down the first, second, and third DS1 links 30a, 30b, 30c. As shown, cell A is inserted into an IMA data stream traversing the first DS1 link 30a, cell B is inserted into an IMA data stream traversing the second DS1 link 30b, and cell C is inserted into an IMA data stream traversing the third DS1 link 30c. An IMA stream traversing the first DS1 link is illustrated in Figure 2A. The ATM cells are grouped into IMA frames comprised of 128 cells some of which are ATM cells, others of which are of two special types of cells specific to the IMA standard, known as IMA cells, specifically, filler cells and ICP (IMA Control Protocol) cells. One of the 128 cells of each standard IMA frame is an ICP cell. For example IMA frame M 470 of an IMA data stream 410 is shown with an ICP cell 412 in the zeroth position in the frame. Each IMA frame typically contains ATM cells with payload data 411 but can also contain IMA filler cells 413 which carry no data and are inserted into IMA frames only to maintain a constant cell rate for cell rate decoupling at the IMA sublayer.

Although only three links are shown between the NE IMA box 10 and the FE IMA box 20, it should be noted that IMA supports more than three physical links in an IMA group.

Figure 2B shows, for the third DS1 link 30c, a third IMA stream 420. The M^{th} IMA frame 480 of the third IMA stream 420 has an ICP cell 422 at the K^{th} position in the frame, has various ATM data payload cells 421 and filler cells 423.

In providing services to customers, network service providers are constantly trying to provide faster, more robust services, and to ensure delivery of those services without loss of data and as minimal interruption as possible. Although redundancy protection is used as a form of network link protection, port protection and equipment protection, the current IMA standard does not provide for redundancy protection switching for an IMA group. The protocol requires bidirectional communication between the far end and the near end to manage the IMA group, which is does not lend itself to the use of redundant protection switching. Instead a quick IMA group restart is used to provide service over an alternate route. Such a mechanism can still result in an outage lasting for as long as a second. IMA is predominantly used in mobile voice networks, and in the field, outages lasting more than 750 milliseconds have been found to cause far end cell tower devices to reset. These resets cause voice calls and mobile device traffic to experience outages which are extremely undesirable for service providers and their customers.

Document EP 1 056 309 A1 describes a redundant switching system according to the preamble of claim 1. Document XP017401745 is a normative document concerning ATM protection switching. Document XP002261777 is a normative document concerting IMA.

### SUMMARY OF THE INVENTION

According to one aspect the invention provides for a redundant switching system for a near end of an IMA virtual link, the redundant switching system comprising: a working network element for hosting a working IMA state machine participating in the IMA virtual link; a protection network element for hosting a protection IMA state machine for participation in the IMA virtual link in an event of a redundant switchover; and an IMA synchronization link coupling said working network element to said protection network element for communicating state information pertaining to said working IMA state machine to said protection IMA state machine.

Some embodiments of the invention further provide for: an IMA reception splitter for duplicating an IMA data stream incoming over said IMA virtual link from a far end of said IMA virtual link, said IMA reception splitter for delivering a copy of said IMA data stream to both the working IMA state machine and the protection IMA state machine; and an ATM reception splitter for duplicating an ATM data stream destined for transmission over said IMA virtual link to said far end of said IMA virtual link, said ATM reception splitter for delivering a copy of said ATM data stream to both the working IMA state machine and the protection IMA state machine.

In some embodiments of the invention, said protection IMA state machine and the working IMA state machine have pre-configured matching Link IDs, IMA Group IDs, and ICP cell offsets.

In some embodiments of the invention Link IDs, an IMA Group ID, and ICP cell offsets of said working IMA state machine are transmitted to said protection IMA state machine over said IMA synchronization link.

In some embodiments of the invention an SCCI number of the working IMA state machine is transmitted to the protection IMA state machine over the IMA synchronization link.

In some embodiments of the invention a frame sequence number delta is transmitted from said working IMA state machine to said protection IMA state machine over said IMA synchronization link, said frame sequence number delta for use by said protection IMA state machine to determine a frame sequence number to use to communicate over the IMA virtual link with the far end of the IMA virtual link after a redundant switchover.

In some embodiments of the invention the frame sequence number delta is determined by subtracting from a first frame sequence number of a frame generated by the working IMA state machine at a first specific time, a second frame sequence number of a frame arriving from a far end IMA, state machine of the far end of the IMA virtual link at the first specific time, and wherein the protection IMA state machine uses said frame sequence number delta by adding said frame sequence number delta to a third frame sequence number of a frame arriving at the protection IMA state machine from said far end IMA state machine.

In some embodiments of the invention said protection IMA state machine is adapted to, upon a startup of said protection IMA state machine, enter into a working state upon receipt of an ICP cell in the IMA data stream from the a far end IMA state machine at the far end of the IMA virtual link wherein the ICP cell indicates that the far end IMA state machine is in a working state.

In some embodiments of the invention, said SSCI number is transmitted from said working IMA state machine to said protection IMA state machine upon a startup of said protection IMA state machine.

In some embodiments of the invention, said SCCI number is retransmitted from said working IMA state machine to said protection IMA state machine each time the value of said SCCI number changes.

In some embodiments of the invention, said SCCI number is retransmitted from said working IMA state machine to said protection IMA state machine on a periodic basis.

In some embodiments of the invention, said frame sequence number delta is transmitted from said working IMA state machine to said protection IMA state machine upon a startup of said protection IMA state machine.

In some embodiments of the invention, said frame sequence number delta is retransmitted from said working IMA state machine to said protection IMA state machine each time an average value of said frame sequence number delta changes.

In some embodiments of the invention, an SCCI number of the working IMA state machine is transmitted to the protection IMA state machine over the IMA synchronization link; a frame sequence number delta is transmitted from said working IMA state machine to said protection IMA state machine over said IMA synchronization link, wherein the frame sequence number delta is determined by subtracting from a first frame sequence number of a frame generated by the working IMA state machine at a first specific time, a second frame sequence number of a frame arriving from a far end IMA state machine of the far end of the IMA virtual link at the first specific time; and said frame sequence number delta is used by said protection IMA state machine by adding said frame sequence number delta to a third frame sequence number of a frame arriving at the protection IMA state machine from said far end IMA state machine to generate a fourth frame sequence number, said fourth frame sequence number for use by said protection IMA state machine to participate in said IMA virtual link after the event of a redundant switchover; wherein said protection IMA state machine is adapted to, upon a startup of said protection IMA state machine, enter into a working state upon receipt of an ICP cell in the IMA data stream from the far end IMA state machine wherein the ICP cell indicates that the far end IMA state machine is in a working state.

In some embodiments of the invention, an APS redundant pair of I/O cards is coupled between the near end and the far end of the IMA virtual line for providing port redundancy protection.

Some embodiments of the invention provide for an IMA transmission splitter for duplicating an output IMA data stream from the working IMA state machine destined for the far end of said IMA virtual link, said IMA transmission splitter for delivering a copy of said output IMA data stream to both a working I/O card and a protection I/O card of said redundant pair of I/O cards; an IMA reception combiner having a first input coupled to said working I/O card and a second input coupled to said protection. I/O card, and an output coupled to said IMA reception splitter; and an IMA switch coupled to the first I/O card and coupled to the second I/O card for coupling of said IMA virtual link to one of said first I/O card and said second I/O card.

According to a second aspect, the invention provides for a method of redundant switching for a near end of an IMA virtual link, the method comprising: synchronizing a protection IMA state machine for participation in the IMA virtual link with a working IMA state machine already participating in the IMA virtual link; and switching over participation in the IMA virtual link from the working IMA state machine to the protection IMA state machine after the protection IMA state machine is synchronized with the working IMA state machine.

Some embodiments the invention further provide for in the step of synchronizing, transmitting from said working IMA state machine, state information pertaining to said working IMA state machine to said protection IMA state machine.

Some embodiments of the invention further provide for duplicating an IMA data stream incoming over said IMA virtual link from a far end of said IMA virtual link; delivering a copy of said IMA data stream to both the working IMA state machine and the protection IMA state machine; duplicating an ATM data stream destined for transmission over said IMA virtual link to a far end of said IMA virtual link; and delivering a copy of said ATM data stream to both the working IMA state machine and the protection IMA state machine.

In some embodiments of the invention, said protection IMA state machine and the working IMA state machine have pre-configured matching Link IDs, IMA Group IDs, and ICP cell offsets.

In some embodiments of the invention, said state information pertaining to said working IMA state machine comprises Link IDs, an IMA Group ID, and ICP cell offsets of said working IMA state machine.

In some embodiments of the invention, the state information pertaining to said working IMA state machine comprises an SCCI number of the working IMA state machine.

In some embodiments of the invention, the state information pertaining to said working IMA state machine comprises a frame sequence number delta, said frame sequence number delta for use by said protection IMA state machine to determine a frame sequence number to use to communicate over the IMA virtual link with the far end of the IMA virtual link.

Some embodiments of the invention further provide for determining the frame sequence number delta by subtracting from a first frame sequence number of a frame generated by the working IMA state machine at a first specific time, a second frame sequence number of a frame arriving from a far end IMA state machine of the far end of the IMA virtual link at the first specific time; and determining at the protection IMA state machine, a fourth frame sequence number by adding said frame sequence number delta to a third frame sequence number of a frame arriving at the protection IMA state machine from said far end IMA state machine, said fourth frame sequence number for use by said protection IMA state machine to participate in said IMA virtual link after the event of a redundant switchover.

Some embodiments of the invention further provide for entering said protection IMA state machine into a working state upon startup of the protection IMA state machine and upon receipt of an ICP cell in the IMA data stream from the a far end IMA state machine at the far end of the IMA virtual link wherein the ICP cell indicates that the far end IMA state machine is in a working state.

Some embodiments of the invention further provide for transmitting said SSCI number is from said working IMA state machine to said protection IMA state machine upon a startup of said protection IMA state machine.

Some embodiments of the invention further provide for retransmitting said SCCI number from said working IMA state machine to said protection IMA state machine each time the value of said SCCI number changes.

Some embodiments of the invention further provide for retransmitting said SCCI number from said working IMA state machine to said protection IMA state machine on a periodic basis.

Some embodiments of the invention further provide for transmitting said frame sequence number delta from said working IMA state machine to said protection IMA state machine upon a startup of said protection IMA state machine.

Some embodiments of the invention provide for retransmitting said frame sequence number delta from said working IMA state machine to said protection IMA state machine each time an average value of said frame sequence number delta changes.

In some embodiments of the invention the state information pertaining to said working IMA state machine comprises an SCCI number of the working IMA state machine and a frame sequence number delta, the method further comprising the steps of: determining the frame sequence number delta by subtracting from a first frame sequence number of a frame generated by the working IMA state machine at a first specific time, a second frame sequence number of a frame arriving from a far end IMA state machine of the far end of the IMA virtual link at the first specific time; determining at the protection IMA state machine, a fourth frame sequence number by adding said frame sequence number delta to a third frame sequence number of a frame arriving at the protection IMA state machine from said far end IMA state machine, said fourth frame sequence number for use by said protection IMA state machine to participate in said IMA virtual link after the event of a redundant switchover; and entering said protection IMA state machine into a working state upon startup of the protection IMA state machine and upon receipt of an ICP cell in the IMA data stream from the far end IMA state machine wherein the ICP cell indicates that the far end IMA state machine is in a working state.

### BRIEF DESCRIPTION OF THE DRAWINGS

The features and advantages of the invention will become more apparent from the following detailed description of the preferred embodiment(s) with reference to the attached figures, wherein:
FIG. 1A is a schematic block diagram of known redundant protection switching;
FIG. 1B is a schematic block diagram of a known IMA group networking;
FIG. 2A and 2B are block diagrams of known IMA data streams according to the ATM forum standard;
FIG. 2C is a block diagram of state variables of the IMA state machine contained in an ICP cell which are synchronized according to the preferred embodiment of the invention;
FIG. 3 is a schematic block diagram of a system for redundant protection switching for an IMA group according to the preferred embodiment of the invention;
FIG. 4 is a schematic block diagram of the system of FIG. 3 after redundant switching has occurred;
FIG. 5 is a schematic block diagram of a system for redundant protection switching for an IMA group having both line card redundancy and input/output port redundancy according to another embodiment of the invention; and
FIG. 6 is a functional block diagram of a method of redundant protection switching for an IMA group according to another embodiment of the invention.

It is noted that in the attached figures, like features bear similar labels.

### DETAILED DESCRIPTION OF THE PREFERRED EMBODIMENTS

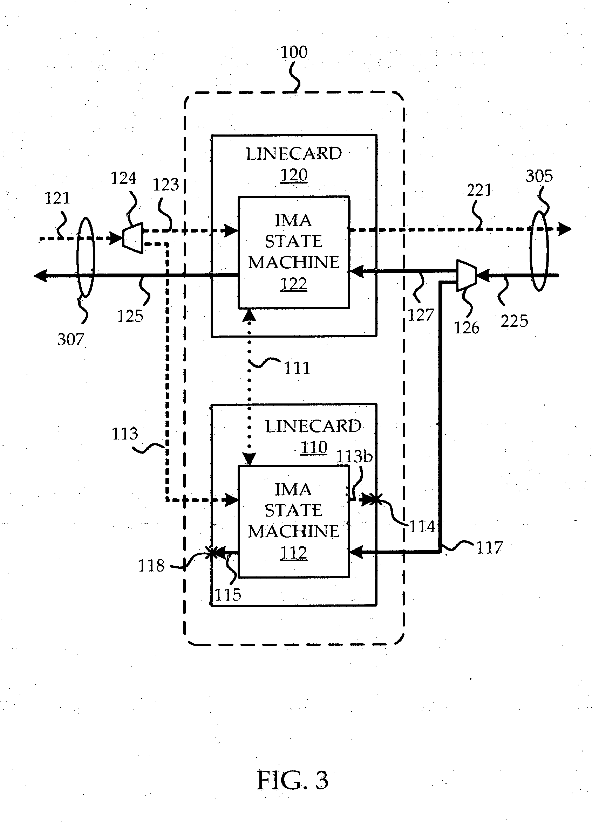

Referring to Figure 3 a system for redundant protection switching for an IMA group according to a preferred embodiment of the invention will now be described in terms of structure.

A near end box 100 services a bi-directional IMA virtual link 305 with a far end box (not shown). The IMA virtual link 305 includes an IMA group reception link 225 from the far end box to the NE box 100 and an IMA group transmission link 221 from the NE box 100 towards the far end box. Although not shown in Figure 3, each IMA group link is comprised of a number of links which make up the IMA group as discussed in association with Figure 1B. Although the IMA virtual link is a single bi-directional virtual link, because outgoing and incoming cells are treated differently, the virtual transmission and reception links over which they travel are depicted separately.

To service the IMA virtual link 305, the near end box 100 comprises a first line card 120 having a first IMA state machine 122, and a second line card 110 having a second IMA state machine 112. In a redundancy protection state, one of the line cards 120, 110 and its respective IMA state machine 122, 112 will be active and designated as the working line card and the working IMA state machine respectively, while the other line card 120, 110 and its respective IMA, state machine 122, 112 will be inactive and designated as the protection line card and the protection IMA state machine respectively.

In Figure 3 the first line card 120 is a working line card 120 and the first IMA state machine 122 is a working IMA state machine 122. The working line card 120 and the working IMA state machine 122 are coupled to the far end box via the IMA group transmission link 221. The IMA group reception link 225 is coupled to an input port of an IMA reception splitter 126 which could for example be an add drop multiplexer. The IMA reception splitter 126 has a first output which is coupled to a working reception IMA group link 127, which in turn is coupled to the working IMA state machine 122.

The second line card 110 is a protection line card 110 and the second IMA state machine 112 is a protection IMA state machine 112. The protection line card 110 and the protection IMA state machine 112 are coupled to the far end box via a protection IMA group reception link 117 which is coupled to a second output of the IMA reception splitter 126. Each of the working IMA group reception link 127 and the protection IMA group reception link 117 has a copy of signals incoming over the IMA group reception link 225 which were split by the IMA reception splitter 126. The working IMA state machine 122 and the protection IMA state machine 112 are coupled to each other by an IMA synchronization link 111.

A bi-directional OC3 link 307 is coupled via an OC3 reception link 121 to an input of an OC3 reception splitter 124. A first output of the OC3 reception splitter 124 is coupled to a working OC3 input link 123 which in turn is coupled to the working IMA state machine 122 of the working line card 120. A second output of the OC3 reception splitter 124 is coupled to a protection OC3 input link 113 which is coupled to the protection IMA state machine 112 of the protection line card 110.

The working IMA state machine 122 is coupled to a working OC3 output link 125, while the protection IMA state machine 112 is coupled to a protection OC3 output link 115, and a protection IMA output link 113b.

While functioning in a redundant protection configuration, the protection OC3 input link 113 is coupled to the protection line card 110 at the protection IMA state machine 112, which sends IMA traffic over protection IMA output link 113b. The protection IMA output link 113b terminates 114 in the protection line card 110, while the protection OC3 output link 115 also terminates 118 in the protection line card 110.

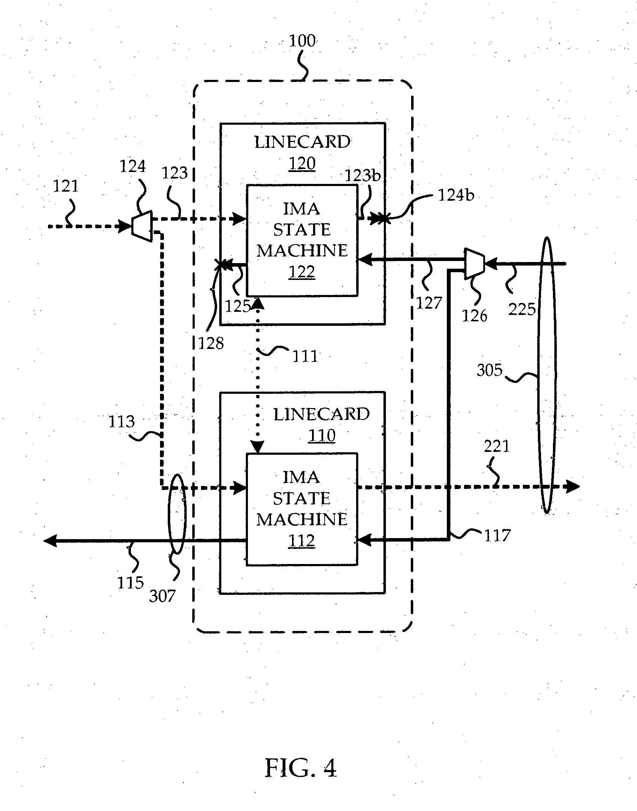

Referring now also to Figure 4, the system of Figure 3 will now be described in terms of function.

For a hot redundant switch to succeed with minimal data loss and interruption as possible, ideally the IMA state machine at the far end will have no indication of the switchover, nor detect any change in state of the IMA state machine of the near end. This transparency can be obtained by synchronizing the state of the protection IMA state machine 112 with the state of the working IMA state machine. In other words, the state of the protection IMA state machine 112 is made to be a duplicate of the state of the working IMA state machine 122 before a hot redundant switch is executed. Synchronization is facilitated by splitting the signals arriving over the IMA group reception link 225 and distributing them to both the working and protection IMA state machines 122, 112, splitting the signals arriving over OC3 reception link 121 and distributing them to both the working and protection IMA state machines 122, 112, and by the exchange of information over the IMA synchronization link 111. During a steady state before any redundant switch, the protection IMA state machine 112 is synchronized with the working IMA state machine and functions as if it were actually participating in the IMA virtual link.

During a steady state of operation in protection mode, the near end box 100 operates as depicted in Figure 3. A plurality of streams of ATM and IMA cells arrive at both the working IMA state machine 122 and the protection IMA state machine 112. Since the protection IMA state machine 112 is not to actually participate in the IMA virtual link before a switchover, no transmissions made over the protection OC3 transmission link 115 leave the protection line card 110. The IMA frames received by the protection line card 110 are processed for the purpose of maintaining synchronicity between the protection IMA state machine and the working IMA state machine 122.

Each ICP cell 422 contains information for IMA group and link management. Synchronization involves ensuring that the states of each of the working and the protection IMA state machines 122, 112 are the same. This state information is present in each ICP cell sent from the near end to the far end. To ensure a smooth switchover, the ICP cells received by the far end IMA state machine should have continuity of the state information they contain before and after the switchover. In Figure 2C, of the information of each ICP cell, values which are to be synchronized are shown, by way of an example ICP cell 422 of the M^{th} frame 480 of the third IMA data stream 420. The relevant fields of the ICP cell 422 are: a LinkID 412a which identifies the IMA link over which the IMA frame having the ICP cell is traveling; an IMA group ID 412b which is a number which identifies the entire IMA group; a frame sequence number 412c which is assigned to each frame and takes on a value for successive frames of 0 through 255 which cycle periodically, an SCCI number (status and control change indication) 412d which for successive ICP cells only changes if there is a status or control change in the originating IMA state machine and may take on a value from 0 to 255; and an ICP cell offset number 412e which indicates an offset position of the ICP cell within its respective frame and which is the same for all frames in the same link.

Values of the fields of the ICP cell 422 depicted in Figure 2C are example values that would be found in the ICP cell 422 of the third IMA data stream illustrated in Figure 2B.

For the purposes of synchronization for a hot redundant switch, the Link ID, IMA ID, and ICP cell offset for each link of the IMA group are easily coordinated between the working IMA state machine 122 and the protection IMA state machine 112 since in general they are static forced variables which can be set in both the working IMA state machine's 122 and the protection IMA state machine's 112 configuration. These values also can be reliably exchanged over IMA synchronization link 111. Due to their dynamic nature, the Frame sequence number and the SCCI are more challenging to synchronize.

In the receive direction, the protection IMA state machine 112 operates as though it were actually participating in the IMA virtual link except its transmission towards the far end and towards the OC3 link 307 get dropped. As such all of the information the working IMA state machine 122 is receiving in the ICP cells from the far end IMA state machine is also being received by the protection IMA state machine 112. These ICP cells contain values such as the frame sequence number and the SCCI of the far end IMA state machine. According to the IMA standard, to conserve processing resources, the ICP cell is only processed if the SCCI number changes or during a start-up of the IMA state machine. As such the protection IMA state machine will obtain the SCCI and frame sequence number from the first ICP cell received after startup, and obtain them again if the SCCI ever changes in any subsequent ICP cell. When an ICP cell is processed it is passed up into hardware/software. Since the IMA state machine of the far end is active and already in a session with the working IMA state machine 122, the Group Status and Control octet of the first ICP cell received by the protection IMA state machine 122 after start-up will indicate that the far end IMA state machine is "operational". According to the standard start-up protocol of an IMA virtual link between two IMA state machines, both IMA state machines must participate in a handshake involving the request and acknowledgement of startup before they enter one of three working states, namely "blocked", "insufficient-links", and "operational". Detection by a near end IMA state machine of "blocked", "insufficient links", or "operational" as a Group Status and Control field before actually performing the handshake with the far end IMA state machine would not be understood by the near end IMA state machine. This situation would not be resolved by a standard unmodified IMA state machine. According to a preferred embodiment of the invention, the protection IMA state machine 112 is a modified IMA state machine adapted to, upon detection of the first ICP cell received after startup with a Group Status and Control field of any of the three IMA working states, immediately switch itself to the appropriate IMA working state according to the state of the IMA virtual link. The SCCI and frame sequence numbers received by the protection IMA state machine 112 in the incoming ICP cell are stored and now that it is in a working state, on the receiving side, the protection IMA state machine 112 has been synchronized and can proceed in the event or switchover, to function as expected in active mode, linked over IMA virtual link 305 with the far end IMA, state machine.

In the transmit direction, the protection IMA state machine 112 does not have the frame sequence number or the SCCI being transmitted by the working IMA state machine 122. Since the SCCI remains constant until there is a change of state of the IMA state machine, the likelihood of the value of the SCCI of the working IMA state machine 122 to change while it is in transit to the protection IMA state machine 112 over the IMA synchronization link 111 is very rare. Hence, the SCCI value is simply transmitted by the working IMA state machine 122 to the protection IMA state machine 112 once, upon a startup of the protection IMA state machine 112, and again each time the SCCI value changes. The frame sequence number however can and does change very rapidly, the value when it is received by the protection IMA state machine 112 could be quite different from what it was when it was transmitted by the working IMA state machine 122. In order to ensure synchronization, the simultaneous or near simultaneous receipt of duplicate IMA frames by the working and protection IMA state machines 122, 112 over the working IMA reception link 127 and protection IMA reception link 117 respectively is utilized. It is safe to say that the frame sequence numbers of frames received by the working IMA state machine 122 and the protection IMA state machine 112 at the same time are the same. The working IMA state machine 122 determines a frame sequence number delta by calculating, upon receipt of an IMA frame over working IMA reception link 127, the frame sequence number of the IMA frame minus the frame sequence number of an IMA frame simultaneously being output from the working IMA state machine 122 over the working IMA transmission link 221. This frame sequence number delta is sent to the protection IMA state machine 112 over the IMA synchronization link 111. Upon receiving the frame sequence number delta from the working IMA state machine 122 the protection IMA state machine 112 calculates the frame sequence number to be output by subtracting the frame sequence number delta from the frame sequence number of a frame arriving at the protection IMA state machine 112 from the far end IMA state machine. Preferably, the frame sequence number delta is transmitted from the working IMA state machine 122 to the protection IMA state machine 112 once, upon startup of the protection IMA state machine 112, and transmitted again each time the value of the frame sequence number delta changes. In order to avoid retransmission of the frame sequence number delta in times of minor timing or frame number misalignment, the value is only retransmitted when an average value of the frame sequence number delta changes. If an event, such as a group enable/disable, causes the value of the frame sequence number delta to change, it is recalculated and retransmitted from the working IMA state machine 122 to the protection IMA state machine 112.

In some embodiments the SCCI value is repeatedly transmitted by the working IMA state machine 122 to the protection IMA state machine 112 on a timed periodic basis.

Since the states of the working IMA state machine 122 and the protection IMA state machine 112 are the same, and since the working OC3 reception link 123 and the protection OC3 reception link 113 are carrying the same OC3 data stream, and since the working IMA reception link 127 and the protection IMA reception link 117 are carrying the same IMA data stream, the hot redundant switch should not cause any interruption or change in state visible to the far end IMA state machine and hence would not cause it to reactivate or otherwise change its activity.

As shown in Figure 4, after a hot redundant switch, the role of the first line card 120 switches to that of a protection line card 120 while the second line card 110 becomes the working line card 110. Similarly, the first IMA state machine 122 becomes the protection IMA state machine 122 while the second IMA state machine 112 becomes the working IMA state machine 112. Accordingly, the IMA group transmission link 221 now emerges from the second IMA state machine 112 of the second line card 110. The previously working OC3 reception link 123 now becomes a protection OC3 reception link 123 which is coupled to the protection line card 120 at the protection IMA state machine 122, which sends IMA traffic over protection IMA output link 123b. The protection IMA output link 123b terminates 124b in the protection line card 120, while the previously working OC3 transmission link 125 has now become a protection OC3 transmission link 125 which is terminated 128 within the first line card 120. The protection IMA group reception link 117 becomes the working IMA group reception link 117 which carries input to the now working IMA state machine 112. The protection OC3 transmission link 115 which was previously terminated in the second line card 110, becomes a working OC3 transmission link 115.

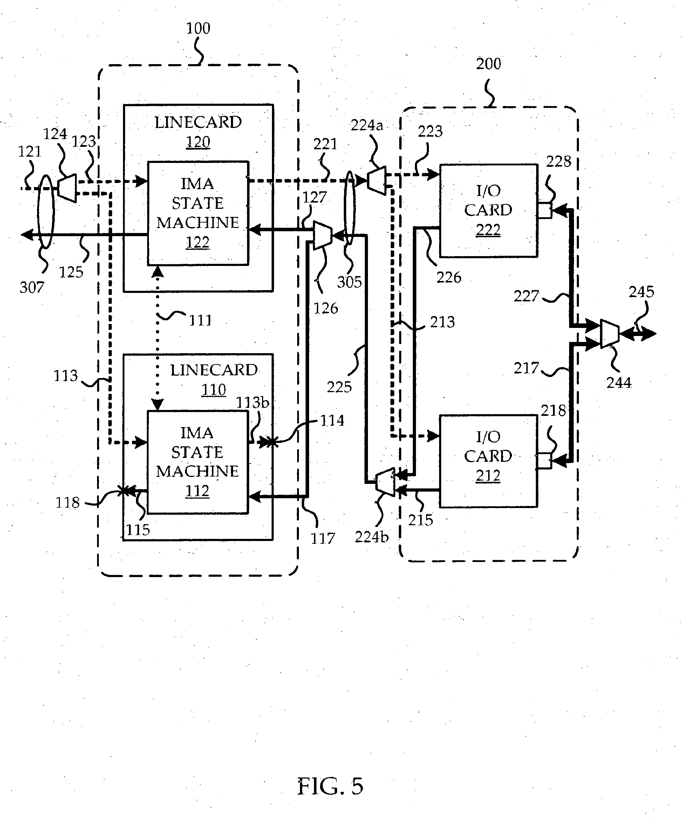

Referring now to Figure 5, a system for redundant protection switching for an IMA group having both line card redundancy and input/output port redundancy (LCR + APS) according to another embodiment of the invention is discussed.

The LCR + APS system of Figure 5 has a near end box 100 similar to that discussed in association with Figures 3 and 4. A first and second line card 120, 110 respectively having a first and second IMA state machine 122, 112 provide line card and IMA state machine redundancy between an OC3 link 307 and an IMA virtual link 305. All of the system elements between the OC3 link 307 and the IMA virtual link 305 are configured and function similarly to that described herein above. Between the IMA virtual link 305 and the far end IMA state machine are elements for providing APS redundant I/O card switching. The IMA virtual link 305 is coupled to an APS redundant I/O card pair 200 through an IMA transmission splitter 224a and an IMA reception combiner 224b. The IMA transmission splitter 224a has two outputs, one of which is linked 223 to an input of a first I/O card 222, the other of which is linked 213 to an output of a second I/O card 212. The IMA reception combiner 224b has two inputs, one of which is linked 226 to an output of the first I/O card 222, the other of which is linked 215 to an output of the second I/O card 212. The IMA group reception link 225 is coupled to an output of the IMA reception combiner 224b while the IMA group transmission link 221 is coupled to an input of the IMA transmission splitter 224a. The first I/O card 222 has a first port 228 coupled to a working IMA group link 227, while the second I/O card 212 has a second port 218 coupled to a protection IMA group link 217. The working IMA group link 227 and the protection IMA group link 217 are coupled to a simplex IMA switch 244 which is coupled to a second IMA virtual link 245. It should be understood that the simplex IMA switch 244 could be replaced in general with any switching capable multiplexing element. For example in an exemplary embodiment, a sonnet box (add-drop multiplexer) is used to make the derision over which of the protection IMA group link 217 and the working IMA group link 227 to connect to the second IMA group link 245, the sonnet box being unaware of the IMA group and only responsive to switching based on the sonnet health of each link.

During redundancy protection, the simplex IMA switch 244 is configured so that the working IMA group link 227 is active. While the first I/O card 222 is active, the second I/O card 212 is inactive and hence serves as a protection I/O card 212. When an APS switch occurs, the simplex IMA switch 244 switches to couple the second IMA group link 245 with the protection IMA group link 217. The second I/O card 212 would become the active and hence working I/O card 212 while the first I/O card 222 would become inactive and hence the protection I/O card 222.

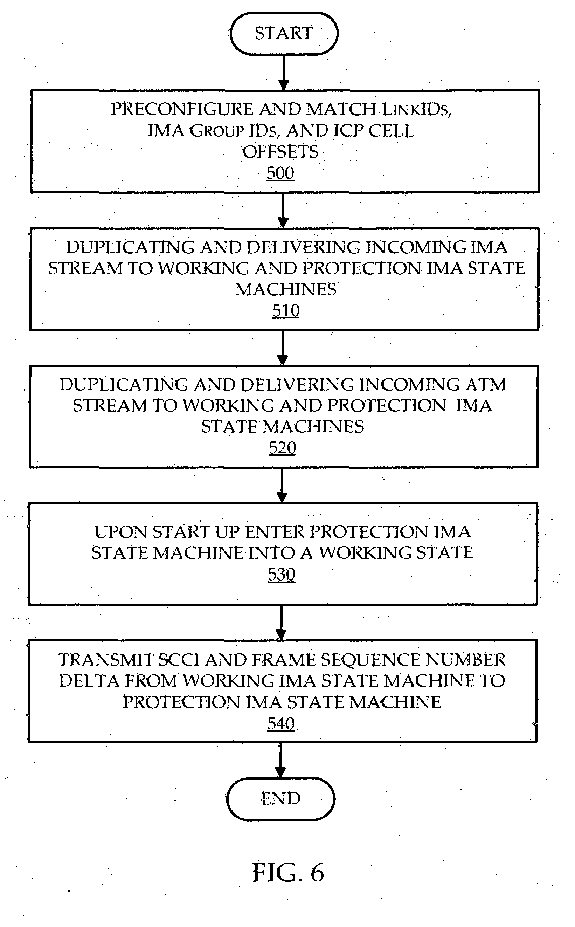

Referring now to Figure 6, steps carried out by the system described herein above in a method for redundancy protection are described.

In step 500 the working IMA state machine and the protection IMA state machine are preconfigured to have similar state variables as described above including LinkIDs, IMA group ID, and ICP cell offsets.

During the steady state of the system in which the working IMA state machine functions as an active IMA state machine in a session with the far end IMA state machine, duplicates of both the incoming IMA data stream over the DS1 links and the incoming ATM data stream over the OC3 link, are delivered to both the working IMA state machine and the protection IMA state machine in steps 510 and 520. Exposing both IMA state machines to the same input streams helps to ensure synchronicity for the hot redundant switch.

In step 530 upon a startup of the protection IMA state machine, it enters into a working state when it receives the first ICP cell from the far end IMA state machine, without the need for the activity startup handshake of the IMA standard.

Once the protection IMA state machine is in a working state, in step 540, the frame sequence number delta, and the SCCI are transmitted from the working IMA state machine to the protection IMA state machine. As described above the frame sequence number delta is used by the protection IMA state machine to choose its own frame sequence number for participating with the far end IMA state machine in the IMA virtual link.

The embodiments presented are exemplary only and persons skilled in the art would appreciate that variations to the embodiments described above may be made without departing from the invention, which is solely defined by the appended claims.

## Claims

1. A redundant switching system for a near end of an IMA virtual link, the redundant switching system comprising:
a working network element (110, 120) for hosting a working IMA state machine (112, 122) participating in the IMA virtual link (305);
a protection network element (110, 120) for hosting a protection IMA state machine (112, 122) for participation in the IMA virtual link (305) in an event of a redundant switchover; and
**characterized by**
an IMA synchronization link (111) coupling said working network element to said protection network element for communicating state information pertaining to said working IMA state machine to said protection IMA state machine.

2. A redundant switching system according to claim 1 further comprising:
an IMA reception splitter for duplicating an IMA data stream incoming over said IMA virtual link from a far end of said IMA virtual link, said IMA reception splitter for delivering a copy of said IMA data stream to both the working IMA state machine and the protection IMA state machine; and
an ATM reception splitter for duplicating an ATM data stream destined for transmission over said IMA virtual link to said far end of said IMA virtual link, said ATM reception splitter for delivering a copy of said ATM data stream to both the working IMA state machine and the protection IMA state machine.

3. A redundant switching system according to claim 2 wherein said protection IMA state machine and the working IMA state machine have preconfigured matching Link IDs, IMA Group IDs, and ICP cell offsets.

4. A redundant switching system according to claim 2 wherein Link IDs, an IMA Group ID, and ICP cell offsets of said working IMA state machine are transmitted to said protection IMA state machine over said IMA synchronization link.

5. A redundant switching system according to claim 2 wherein an SCCI number of the working IMA state machine is transmitted to the protection IMA state machine over the IMA synchronization link.

6. A redundant switching system according to claim 5 wherein a frame sequence number delta is transmitted from said working IMA state machine to said protection IMA state machine over said IMA synchronization link, said frame sequence number delta for use by said protection IMA state machine to determine a frame sequence number to use to communicate over the IMA virtual link with the far end of the IMA virtual link after a redundant switchover.

7. A redundant switching system according to claim 6 wherein the frame sequence number delta is determined by subtracting from a first frame sequence number of a frame generated by the working IMA state machine at a first specific time, a second frame sequence number of a frame arriving from a far end IMA state machine of the far end of the IMA virtual link at the first specific time, and wherein the protection IMA state machine uses said frame sequence number delta by adding said frame sequence number delta to a third frame sequence number of a frame arriving at the protection IMA state machine from said far end IMA state machine.

8. A redundant switching system according to claim 2 wherein said protection IMA state machine is adapted to, upon a startup of said protection IMA state machine, enter into a working state upon receipt of an ICP cell in the IMA data stream from the a far end IMA state machine at the far end of the IMA virtual link wherein the ICP cell indicates that the far end IMA state machine is in a working state.

9. A redundant switching system according to claim 5 wherein said SSCI number is transmitted from said working IMA state machine to said protection IMA state machine upon a startup of said protection IMA state machine.

10. A redundant switching system according to claim 9 wherein said SCCI number is retransmitted from said working IMA state machine to said protection IMA state machine each time the value of said SCCI number changes.

11. A redundant switching system according to claim 9 wherein said SCCI number is retransmitted from said working IMA state machine to said protection IMA state machine on a periodic basis.

12. A redundant switching system according to claim 6 wherein said frame sequence number delta is transmitted from said working IMA state machine to said protection IMA state machine upon a startup of said protection IMA state machine.

13. A redundant switching system according to claim 12 wherein said frame sequence number delta is retransmitted from said working IMA state machine to said protection IMA state machine each time an average value of said frame sequence number delta changes.

14. A redundant switching system according to claim 3 wherein:
an SCCI number of the working IMA state machine is transmitted to the protection IMA state machine over the IMA synchronization link;
a frame sequence number delta is transmitted from said working IMA state machine to said protection IMA state machine over said IMA synchronization link, wherein the frame sequence number delta is determined by subtracting from a first frame sequence number of a frame generated by the working IMA state machine at a first specific time, a second frame sequence number of a frame arriving from a far end IMA state machine of the far end of the IMA virtual link at the first specific time; and
said frame sequence number delta is used by said protection IMA state machine by adding said frame sequence number delta to a third frame sequence number of a frame arriving at the protection IMA state machine from said far end IMA state machine to generate a fourth frame sequence number, said fourth frame sequence number for use by said protection IMA state machine to participate in said IMA virtual link after the event of a redundant switchover; wherein said protection IMA state machine is adapted to, upon a startup of said protection IMA state machine, enter into a working state upon receipt of an ICP cell in the IMA data stream from the far end IMA state machine wherein the ICP cell indicates that the far end IMA state machine is in a working state.

15. A redundant switching system according to claim 14 wherein an APS redundant pair of I/O cards is coupled between the near end and the far end of the IMA virtual link for providing port redundancy protection.

16. A redundant switching system according to claim 15 further comprising:
an IMA transmission splitter for duplicating an output IMA data stream from the working IMA state machine destined for the far end of said IMA virtual link, said IMA transmission splitter for delivering a copy of said output IMA data stream to both a working I/O card and a protection I/O card of said redundant pair of I/O cards;
an IMA reception combiner having a first input coupled to said working I/O card and a second input coupled to said protection I/O card, and an output coupled to said IMA reception splitter; and
an IMA switch coupled to the first I/O card and coupled to the second I/O card for coupling of said IMA virtual link to one of said first I/O card and said second I/O card.

17. A method of redundant switching for a near end of an IMA virtual link,
wherein a working network element is for hosting a working IMA state machine and a protection network element is for hosting a protection IMA state machine,
the method comprising:
switching over participation in the IMA virtual link (305) from said working IMA state machine to said protection IMA state machine **characterized by**
synchronizing, by means of an IMA synchronization link (111) coupling said networking element to said protection network element for communicating state information pertaining to said working IMA state machine to said protection IMA state machine, the protection IMA state machine (120, 122) for participation in the IMA virtual link with the working IMA state machine (110, 112) already participating in the IMA virtual link; and
wherein switching over occurs after the protection IMA state machine is synchronized with the working IMA state machine.

18. A method of redundant switching according to claim 17 wherein the step of synchronizing further comprises:
transmitting from said working IMA state machine, state information pertaining to said working IMA state machine to said protection IMA state machine.

19. A method of redundant switching according to claim 18 further comprising:
duplicating an IMA data stream incoming over said IMA virtual link from a far end of said IMA virtual link;
delivering a copy of said IMA data stream to both the working IMA state machine and the protection IMA state machine;
duplicating an ATM data stream destined for transmission over said IMA virtual link to a far end of said IMA virtual link; and
delivering a copy of said ATM data stream to both the working IMA state machine and the protection IMA state machine.

20. A method of redundant switching according to claim 19 wherein said protection IMA state machine and the working IMA state machine have preconfigured matching Link IDs, IMA Group IDs, and ICP cell offsets.

21. A method of redundant switching according to claim 19 wherein, the state information pertaining to said working IMA state machine comprises Link IDs, an IMA Group ID and ICP cell offsets of said working IMA state machine.

22. A method of redundant switching according to claim 18 wherein, the state information pertaining to said working IMA state machine comprises an SCCI number of the working IMA state machine.

23. A method of redundant switching according to claim 22 wherein, the state information pertaining to said working IMA state machine comprises a frame sequence number delta, said frame sequence number delta for use by said protection IMA state machine to determine a frame sequence number to use to communicate over the IMA virtual link with the far end of the IMA virtual link.

24. A method of redundant switching according to claim 23 further comprising the step of:
determining the frame sequence number delta by subtracting from a first frame sequence number of a frame generated by the working IMA state machine at a first specific time, a second frame sequence number of a frame arriving from a far end IMA state machine of the far end of the IMA virtual link at the first specific time; and
determining at the protection IMA state machine, a fourth frame sequence number by adding said frame sequence number delta to a third frame sequence number of a frame arriving at the protection IMA state machine from said far end IMA state machine, said fourth frame sequence number for use by said protection IMA state machine to participate in said IMA virtual link after the event of a redundant switchover.

25. A method of redundant switching according to claim 18 further comprising:
entering said protection IMA state machine into a working state upon startup of the protection IMA state machine and upon receipt of an ICP cell in the IMA data stream from the a far end IMA state machine at the far end of the IMA virtual link wherein the ICP cell indicates that the far end IMA state machine is in a working state.

26. A method of redundant switching according to claim 22 further comprising:
transmitting said SSCI number is from said working IMA state machine to said protection IMA state machine upon a startup of said protection IMA state machine.

27. A method of redundant switching according to claim 26 further comprising:
retransmitting said SCCI number is from said working IMA state machine to said protection IMA state machine each time the value of said SCCI number changes.

28. A method of redundant switching according to claim 26 further comprising:
retransmitting said SCCI number is from said working IMA state machine to said protection IMA state machine on a periodic basis.

29. A method of redundant switching according to claim 23 further comprising:
transmitting said frame sequence number delta is from said working IMA state machine to said protection IMA state machine upon a startup of said protection IMA state machine.

30. A method of redundant switching according to claim 28 further comprising: retransmitting said frame sequence number delta from said working IMA state machine to said protection IMA state machine each time an average value of said frame sequence number delta changes.

31. A method of redundant switching according to claim 21 wherein the state information pertaining to said working IMA state machine comprises an SCCI number of the working IMA state machine and a frame sequence number delta, the method further comprising the steps of:
determining the frame sequence number delta by subtracting from a first frame sequence number of a frame generated by the working IMA state machine at a first specific time, a second frame sequence number of a frame arriving from a far end IMA state machine of the far end of the IMA virtual link at the first specific time;
determining at the protection IMA state machine, a fourth frame sequence number by adding said frame sequence number delta to a third frame sequence number of a frame arriving at the protection IMA state machine from said far end IMA state machine, said fourth frame sequence number for use by said protection IMA state machine to participate in said IMA virtual link after the event of a redundant switchover; and
entering said protection IMA state machine into a working state upon startup of the protection IMA state machine and upon receipt of an ICP cell in the IMA data stream from the far end IMA state machine wherein the ICP cell indicates that the far end IMA state machine is in a working state.

## Patentansprüche

1. Redundantes Vermittlungssystem für einen nahen Endpunkt einer virtuellen IMA-Schaltung, wobei das redundante Vermittlungssystem umfasst:
ein arbeitendes Netzelement (110, 120) für das Hosten eines arbeitenden IMA-Zustandsautomaten, der an einer virtuellen IMA-Schaltung (305) beteiligt ist;
ein Schutzschaltungs-Netzelement (110, 120) für das Hosten eines schützenden IMA-Zustandsautomaten, zur Teilnahme an einer virtuellen IMA-Schaltung (305) im Fall eines redundanten Umschaltens; und
**gekennzeichnet ist durch**
eine Verbindung zur IMA-Statussynchronisierung (111), besagtes arbeitendes Netzelement mit besagtem Schutz-Netzelement verbindend, zwecks Weiterleitung von Zustandsinformationen zu besagtem arbeitendem IMA-Zustandsautomaten an besagten schützenden IMA-Zustandsautomaten.

2. Redundantes Schaltsystem nach Anspruch 1, weiterhin umfassend:
einen IMA-Empfangssplitter zum Duplizieren eines über besagte virtuelle IMA-Schaltung von einem entfernten Endpunkt besagter virtueller IMA-Scllaltung eingehenden IMA-Datenstroms, wobei besagter IMA-Empfangssplitter eine Kopie besagten IMA-Datenstroms sowohl an den arbeitenden IMA-Zustandsautomaten als auch an den schützenden IMA-Zustandsautomaten liefert, und
einen ATM-Empfangssplitter zum Duplizieren eines über besagte virtuelle IMA-Schaltung an besagten entfernten Endpunkt besagter virtueller IMA-Schaltung zu sendenden ATM-Datenstroms, wobei besagter ATM-Empfangssplitter eine Kopie besagten ATM-Datenstroms sowohl an den arbeitenden IMA-Zustandsautomaten als auch an den schützenden IMA-Zustandsautomaten liefert.

3. Redundantes Schaltsystem nach Anspruch 2, wobei besagter schützender IMA-Zustandsautomat und der arbeitende IMA-Zustandsautomat voreingestellt über abgeglichene Link-IDs, IMA-Gruppen-IDs und ICP-Zellen-Verschiebungen verfügen.

4. Redundantes Schaltsystem nach Anspruch 2, wobei abgeglichene Link-IDs, IMA-Gruppen-IDs und ICP-Zellen-Verschiebungen des besagten, arbeitenden IMA-Zustandsautomaten besagtem schützendem IMA-Zustandsautomaten über besagte Verbindung zur IMA-Statussynchronisierung übermittelt werden.

5. Redundantes Schaltsystem nach Anspruch 2, wobei die SCCI-Nummer des arbeitenden IMA-Zustandsautomaten dem schützenden IMA-Zustandsautomaten über die Verbindung zur IMA-Statussynchronisierung übermittelt wird.

6. Redundantes Schaltsystem nach Anspruch 5, wobei eine Rahmensequenznummer Delta von dem besagten, arbeitenden IMA-Zustandsautomaten über besagte Verbindung zur IMA-Statussynchronisierung an besagten schützenden IMA-Zustandsautomaten übermittelt wird, wobei besagte Rahmensequenznummer Delta bestimmt ist zur Verwendung durch besagten schützenden IMA-Zustandsautomaten zur Bestimmung einer Rahmensequenznummer zur Verwendung für die Kommunikation über die virtuelle IMA-Schaltung mit dem entfernten Endpunkt der virtuelle IMA-Schaltung nach einem redundanten Umschalten.

7. Redundantes Schaltsystem nach Anspruch 6, wobei die Rahmensequenznummer Delta bestimmt wird durch das Subtrahieren einer zweiten Rahmensequenznummer eines Rahmens, der zum ersten spezifischen Zeitpunkt von einem IMA-Zustandsautomaten an einem entfernten Endpunkt der virtuellen IMA-Schaltung am entfernten Endpunkt eingeht, von einer ersten Rahmensequenznummer eines Rahmens, der vom arbeitenden IMA-Zustandsautomaten zu besagtem erstem spezifischen Zeitpunkt generiert wird, und wobei der schützende IMA-Zustandsautomat besagte Rahmensequenznummer Delta durch Addieren besagter Rahmensequenznummer Delta zu einer dritten Rahmensequenznummer eines Rahmens verwendet, die bei dem schützenden IMA-Zustandsautomaten von besagtem IMA-Zustandsautomaten am entfernten Endpunkt eingeht.

8. Redundantes Schaltsystem nach Anspruch 2, wobei besagter schützender IMA-Zustandsautomat dafür ausgelegt ist, um auf das Hochfahren besagten schützenden IMA-Zustandsautomaten hin in einen arbeitenden Zustand zu wechseln, und zwar in Reaktion auf den Empfang einer ICP-Zelle in dem IMA-Datenstrom von dem an einem entfernten Endpunkt liegenden IMA-Zustandsautomaten an der virtuellen IMA-Schaltung am entfernten Endpunkt, wobei die ICP-Zelle anzeigt, dass der IMA-Zustandsautomat am entfernten Endpunkt sich im arbeitenden Zustand befindet.

9. Redundantes Schaltsystem nach Anspruch 5, wobei besagte SCCI-Nummer von besagtem arbeitendem IMA-Zustandsautomaten an besagten schützenden IMA-Zustandsautomaten in Reaktion auf das Hochfahren besagten schützenden IMA-Zustandsautomaten hin übermittelt wird.

10. Redundantes Schaltsystem nach Anspruch 9, wobei besagte SCCI-Nummer von besagtem arbeitendem IMA-Zustandsautomaten an besagten schützenden IMA-Zustandsautomaten jedes Mal dann erneut übermittelt wird, wenn sich der Wert besagter SCCI-Nummer verändert.

11. Redundantes Schaltsystem nach Anspruch 9, wobei besagte SCCI-Nummer vom besagten arbeitenden IMA-Zustandsautomaten an besagten schützenden IMA-Zustandsautomaten periodisch erneut übermittelt wird.

12. Redundantes Schaltsystem nach Anspruch 6, wobei besagte Rahmensequenznummer Delta von dem besagtem arbeitendem IMA-Zustandsautomaten an besagten schützenden IMA-Zustandsautomaten in Reaktion auf das Hochfahren besagten schützenden IMA-Zustandsautomaten hin übermittelt wird.

13. Redundantes Schaltsystem nach Anspruch 12, wobei besagte Rahmensequenznummer Delta von besagtem arbeitendem IMA-Zustandsautomaten an besagten schützenden IMA-Zustandsautomaten jedes Mal dann erneut übermittelt wird, wenn sich ein Durchschnittswert besagter Rahmensequenznummer Delta verändert.

14. Redundantes Schaltsystem nach Anspruch 3, wobei:
eine SCCI-Nummer des arbeitenden IMA-Zustandsautomaten dem schützendem IMA-Zustandsautomaten über die Verbindung zur IMA-Statussynchronisierung übermittelt wird;
eine Rahmensequenznummer Delta von besagtem arbeitendem IMA-Zustandsautomaten an besagten schützenden IMA-Zustandsautomaten über besagte Verbindung zur IMA-Statussynchronisierung übermittelt wird, wobei die Rahmensequenznummer Delta bestimmt wird durch das Subtrahieren einer zweiten Rahmensequenznummer eines Rahmens, der zum ersten spezifischen Zeitpunkt von einem IMA-Zustandsautomaten an einem entfernten Endpunkt der virtuellen IMA-Schaltung am entfernten Endpunkt eingeht, von einer ersten Rahmensequenznummer eines Rahmens, der vom arbeitenden IMA-Zustandsautomaten zu besagtem erstem spezifischen Zeitpunkt generiert wird; und
besagte Rahmensequenznummer Delta von besagtem schützendem IMA-Zustandsautomaten durch das addieren besagter Rahmensequenznummer Delta zu einer dritten Rahmensequenznummer eines Rahmens, der am schützenden IMA-Zustandsautomaten vom besagten, am entfernten Endpunkt liegenden IMA-Zustandsautomaten eingeht, verwendet wird zum Generieren einer vierten Rahmensequenznummer, wobei besagte vierte Rahmensequenznummer von besagtem schützendem IMA-Zustandsautomaten verwendet wird zur Teilnahme an besagter virtueller IMA-Schaltung nach dem Eintreten eines redundanten Umschaltens; wobei besagter schützender IMA-Zustandsautomat dafür ausgelegt ist, um nach dem Hochfahren des besagten, schützenden IMA-Zustandsautomaten auf den Empfang einer ICP-Zelle im IMA-Datenstrom vom IMA-Zustandsautomaten am entfernten Endpunkt hin in einen arbeitenden Zustand zu wechseln, wobei die ICP-Zelle anzeigt, dass sich der IMA-Zustandsautomat am entfernten Endpunkt in einem arbeitenden Zustand befindet.

15. Redundantes Schaltsystem nach Anspruch 14, wobei ein redundantes Paar von I/O-Karten einer APS-Schaltung zwischen den nahen Endpunkt und den entfernten Endpunkt der virtuellen IMA-Schaltung geschaltet wird, als Schutzvorkehrung durch redundanten Ein- und Ausgänge.

16. Redundantes Schaltsystem nach Anspruch 15, weiterhin umfassend: einen IMA-Sendesplitter für das Duplizieren eines Ausgangs-IMA-Datenstroms aus dem arbeitenden IMA-Zustandsautomaten, der an den entfernten Endpunkt besagter virtueller IMA-Schaltung gerichtet ist, wobei besagter IMA-Sendesplitter ausgelegt ist für das Liefern einer Kopie besagten Ausgangs-IMA-Datenstroms sowohl an die arbeitende I/O-Karte als auch an eine schützende I/O-Karte besagten redundanten Paars von I/O-Karten.
einen IMA-Empfangsverknüpfer, wobei ein erster Eingang gekoppelt ist an besagte arbeitende I/O-Karte und ein zweiter Eingang an besagte schützende I/O-Karte, und wobei ein Ausgang gekoppelt ist an besagten IMA-Eingangssplitter; und
eine IMA-Schaltung, gekoppelt an die erste I/O-Karte und gekoppelt an die zweite I/O-Karte zum Koppeln besagter virtueller IMA-Schaltung an entweder besagte erste I/O-Karte oder besagte zweite I/O-Karte.

17. Verfahren für ein redundantes Schaltsystem für einen nahen Endpunkt einer virtuellen IMA-Schaltung,
wobei ein arbeitendes Netzelement dem Hosten eines arbeitenden IMA-Zustandsautomaten dient und ein schützendes Netzelement dem Hosten eines schützenden IMA-Zustandsautomaten,
wobei das Verfahren umfasst:
Umschalten der Teilnahme an der virtuellen IMA-Schaltung (305) vom besagten arbeitenden IMA-Zustandsautomaten an besagten schützenden IMA-Zustandsautomaten, **gekennzeichnet durch**
anhand einer Verbindung zur IMA-Statussynchronisierung (111) besagten Netzelements, das besagtes arbeitendes Netzelement zum Kommunizieren von Zustandsinformationen zum besagten arbeitenden IMA-Zustandsautomaten an besagten schützenden IMA-Zustandsautomaten an besagtes schützendes Netzelement koppelt, das Synchronisieren des schützenden IMA-Zustandsautomaten (110, 122) mit dem arbeitenden IMA-Zustandsautomaten (110, 112), der bereits an der virtuellen IMA-Schaltung teilnimmt, zwecks Teilnahme an der virtuellen IMA-Schaltung; und
wobei das Umschalten erfolgt, nachdem der schützende IMA-Zustandsautomat mit dem arbeitenden IMA-Zustandsautomaten synchronisiert ist.

18. Verfahren für ein redundantes Schaltsystem nach Anspruch 17, wobei der Schritt des Synchronisierens weiterhin umfasst:
Übertragen von Zustandsinformationen zu besagtem arbeitenden IMA-Zustandsautomaten vom besagten arbeitenden IMA-Zustandsautomaten an besagten schützenden IMA-Zustandsautomaten.

19. Verfahren für ein redundantes Schaltsystem nach Anspruch 18, weiterhin umfassend:
das Duplizieren eines über besagte virtuelle IMA-Schaltung vom entfernten Endpunkt besagter virtueller IMA-Schaltung eingehenden IMA-Datenstroms;
Bereitstellen einer Kopie besagten IMA-Datenstroms sowohl an den arbeitenden IMA-Zustandsautomaten als auch an den schützenden IMA-Zustandsautomaten;
das Duplizieren eines zur Übertragung über besagte virtuelle IMA-Schaltung zu einem entfernten Endpunkt besagter virtueller IMA-Schaltung bestimmten ATM-Datenstroms;
Bereitstellen einer Kopie besagten ATM-Datenstroms sowohl an den arbeitenden IMA-Zustandsautomaten als auch an den schützenden IMA-Zustandsautomaten;

20. Verfahren für das redundante Schalten nach Anspruch 19, wobei besagter schützender IMA-Zustandsautomat und der arbeitende IMA-Zustandsautomat voreingestellt über abgeglichene Link-IDs, IMA-Gruppen-IDs und ICP-Zellen-Verschiebungen verfügen.

21. Verfahren für das redundante Schalten nach Anspruch 19, wobei die zum besagten arbeitenden IMA-Zustandsautomaten gehörende Zustandsinformation Link-IDs, IMA-Gruppen-IDs und ICP-Zellen-Verschiebungen besagten arbeitenden IMA-Zustandsautomaten umfasst.

22. Verfahren für das redundante Schalten nach Anspruch 18, wobei die zum besagten arbeitenden IMA-Zustandsautomaten gehörende Zustandsinformation eine SCCI-Nummer des arbeitenden IMA-Zustandsautomaten umfasst.

23. Verfahren für das redundante Schalten nach Anspruch 22, wobei die Zustandsinformation zu besagtem arbeitendem IMA-Zustandsautomaten über eine Rahmensequenznummer Delta verfügt, wobei besagte Rahmensequenznummer Delta bestimmt ist zur Verwendung durch besagten schützenden IMA-Zustandsautomaten zur Bestimmung einer Rahmensequenznummer zur Verwendung für die Kommunikation über die virtuelle IMA-Schaltung mit dem entfernten Endpunkt der virtuelle IMA-Schaltung.

24. Verfahren für das redundante Schalten nach Anspruch 23, weiterhin folgenden Schritt umfassend:
Bestimmen der Rahmensequenznummer Delta durch das Subtrahieren einer zweiten Rahmensequenznummer eines Rahmens, der zum ersten spezifischen Zeitpunkt von einem IMA-Zustandsautomaten an einem entfernten Endpunkt der virtuellen IMA-Schaltung am entfernten Endpunkt eingeht, von einer ersten Rahmensequenznummer eines Rahmens, der vom arbeitenden IMA-Zustandsautomaten zu besagtem erstem spezifischen Zeitpunkt generiert wird; und
Bestimmen einer vierten Rahmensequenznummer am schützenden IMA-Zustandsautomaten durch das addieren besagter Rahmensequenznummer Delta zu einer dritten Rahmensequenznummer eines Rahmens, der am schützenden IMA-Zustandsautomaten vom besagten, am entfernten Endpunkt liegenden IMA-Zustandsautomaten eingeht, wobei besagte vierte Rahmensequenznummer von besagtem schützendem IMA-Zustandsautomaten verwendet wird zur Teilnahme an besagter virtueller IMA-Schaltung nach dem Eintreten eines redundanten Umschaltens

25. Verfahren für das redundante Schalten nach Anspruch 18, weiterhin umfassend:
nach dem Hochfahren des besagten, schützenden IMA-Zustandsautomaten das Eintreten des besagten, schützenden IMA-Zustandsautomaten in einen arbeitenden Zustand, und zwar in Reaktion auf den Empfang einer ICP-Zelle in dem IMA-Datenstrom von dem an einem entfernten Endpunkt liegenden IMA-Zustandsautomaten an der virtuellen IMA-Schaltung am entfernten Endpunkt, wobei die ICP-Zelle anzeigt, dass der IMA-Zustandsautomat am entfernten Endpunkt sich im arbeitenden Zustand befindet.

26. Verfahren für das redundante Schalten nach Anspruch 22, weiterhin umfassend:
das Übermitteln besagter SCCI-Nummer vom besagten arbeitenden IMA-Zustandsautomaten an besagten schützenden IMA-Zustandsautomaten in Reaktion auf das Hochfahren besagten schützenden IMA-Zustandsautomaten.

27. Verfahren für das redundante Schalten nach Anspruch 26, weiterhin umfassend:
erneutes Übermitteln besagter SCCI-Nummer vom besagten arbeitenden IMA-Zustandsautomaten an besagten schützenden IMA-Zustandsautomaten jedes Mal dann, wenn sich der Wert besagter SCCI-Nummer verändert.

28. Verfahren für das redundante Schalten nach Anspruch 26, weiterhin umfassend:
erneutes Übermitteln besagter SCCI-Nummer vom besagten arbeitenden IMA-Zustandsautomaten an besagten schützenden IMA-Zustandsautomaten auf periodischer Basis.

29. Verfahren für das redundante Schalten nach Anspruch 23, weiterhin umfassend:
das Übermitteln besagter Rahmensequenznummer Delta vom besagten arbeitenden IMA-Zustandsautomaten an besagten schützenden IMA-Zustandsautomaten in Reaktion auf das Hochfahren besagten schützenden IMA-Zustandsautomaten.

30. Verfahren für das redundante Schalten nach Anspruch 28, weiterhin umfassend:
erneutes Übermitteln besagter Rahmensequenznummer Delta vom besagten arbeitenden IMA-Zustandsautomaten an besagten schützenden IMA-Zustandsautomaten jedes Mal dann, wenn sich ein Durchschnittswert der besagten Rahmensequenznummer Delta verändert.

31. Verfahren für das redundante Schalten nach Anspruch 21, wobei die zum besagten arbeitenden IMA-Zustandsautomaten gehörende Zustandsinformation eine SCCI-Nummer des arbeitenden IMA-Zustandsautomaten und eine Rahmensequenznummer Delta umfasst, wobei das Verfahren weiterhin folgende Schritte umfasst:
Bestimmen der Rahmensequenznummer Delta durch das Subtrahieren einer zweiten Rahmensequenznummer eines Rahmens, der zum ersten spezifischen Zeitpunkt von einem IMA-Zustandsautomaten an einem entfernten Endpunkt der virtuellen IMA-Schaltung am entfernten Endpunkt eingeht, von einer ersten Rahmensequenznummer eines Rahmens, der vom arbeitenden IMA-Zustandsautomaten zu besagtem erstem spezifischen Zeitpunkt generiert wird;
Bestimmen einer vierten Rahmensequenznummer am schützenden IMA-Zustandsautomaten durch das addieren besagter Rahmensequenznummer Delta zu einer dritten Rahmensequenznummer eines Rahmens, der am schützenden IMA-Zustandsautomaten vom besagten, am entfernten Endpunkt liegenden IMA-Zustandsautomaten eingeht, wobei besagte vierte Rahmensequenznummer von besagtem schützendem IMA-Zustandsautomaten verwendet wird zur Teilnahme an besagter virtueller IMA-Schaltung nach dem Eintreten eines redundanten Umschaltens; und
nach dem Hochfahren des besagten, schützenden IMA-Zustandsautomaten das Eintreten des besagten, schützenden IMA-Zustandsautomaten in einen arbeitenden Zustand, und zwar in Reaktion auf den Empfang einer ICP-Zelle in dem IMA-Datenstrom von dem an einem entfernten Endpunkt liegenden IMA-Zustandsautomaten, wobei die ICP-Zelle anzeigt, dass der IMA-Zustandsautomat am entfernten Endpunkt sich im arbeitenden Zustand befindet.

## Revendications

1. Système de commutation redondante pour une extrémité proche d'une liaison virtuelle IMA, le système de commutation redondante comprenant :
un élément de réseau de travail (110, 120) pour accueillir un automate IMA de travail (112, 122) participant à la liaison virtuelle IMA (305) ;
un élément de réseau de protection (110, 120) pour accueillir un automate IMA de protection (112, 122) devant participer à la liaison virtuelle IMA (305) en cas de commutation redondante ; et
**caractérisé par**
une liaison de synchronisation IMA (111) couplant ledit élément de réseau de travail audit élément de réseau de protection pour communiquer des informations d'état se rapportant audit automate IMA de travail audit automate IMA de protection.

2. Système de commutation redondante selon la revendication 1, comprenant en outre :
un diviseur de réception IMA pour dupliquer un flux de données IMA entrant sur ladite liaison virtuelle IMA à partir d'une extrémité distante de ladite liaison virtuelle IMA, ledit diviseur de réception IMA délivrant une copie dudit flux de données IMA à l'automate IMA de travail et à l'automate IMA de protection ; et
un diviseur de réception ATM pour dupliquer un flux de données ATM destiné à la transmission sur ladite liaison virtuelle IMA vers ladite extrémité distante de ladite liaison virtuelle IMA, ledit diviseur de réception ATM délivrant une copie dudit flux de données ATM à l'automate IMA de travail et à l'automate IMA de protection.

3. Système de commutation redondante selon la revendication 2 dans lequel ledit automate IMA de protection et l'automate IMA de travail présentent des ID de liaison, des ID de groupe IMA et des décalages de cellules ICP pré-configurés qui correspondent.

4. Système de commutation redondante selon la revendication 2 dans lequel des ID de liaison, une ID de groupe IMA et des décalages de cellules ICP dudit automate IMA de travail sont transmis audit automate IMA de protection sur ladite liaison de synchronisation IMA.

5. Système de commutation redondante selon la revendication 2 dans lequel un numéro SCCI de l'automate IMA de travail est transmis à l'automate IMA de protection sur la liaison de synchronisation IMA.

6. Système de commutation redondante selon la revendication 5 dans lequel un delta de numéro de séquence de trame est transmis à partir dudit automate IMA de travail audit automate IMA de protection sur ladite liaison de synchronisation IMA, ledit delta de numéro de séquence de trame étant destiné à être utilisé par ledit automate IMA de protection pour déterminer un numéro de séquence de trame à utiliser pour communiquer sur la liaison virtuelle IMA avec l'extrémité distante de la liaison virtuelle IMA après une commutation redondante.

7. Système de commutation redondante selon la revendication 6 dans lequel le delta de numéro de séquence de trame est déterminé en soustrayant d'un premier numéro de séquence de trame d'une trame générée par l'automate IMA de travail à un premier moment spécifique, un deuxième numéro de séquence de trame d'une trame provenant d'un automate IMA d'extrémité distante de l'extrémité distante de la liaison virtuelle IMA au premier moment spécifique, et dans lequel l'automate IMA de protection utilise ledit delta de numéro de séquence de trame en ajoutant ledit delta de numéro de séquence de trame à un troisième numéro de séquence de trame d'une trame arrivant au niveau de l'automate IMA de protection à partir dudit automate IMA d'extrémité distante.

8. Système de commutation redondante selon la revendication 2 dans lequel ledit automate IMA de protection est adapté pour, lors d'un démarrage dudit automate IMA de protection, entrer dans un état de travail dès réception d'une cellule ICP dans le flux de données IMA à partir de l'automate IMA d'extrémité distante à l'extrémité distante de la liaison virtuelle IMA dans lequel la cellule ICP indique que l'automate IMA d'extrémité distante est dans un état de travail.

9. Système de commutation redondante selon la revendication 5 dans lequel ledit numéro SCCI est transmis à partir dudit automate IMA de travail vers ledit automate IMA de protection lors d'un démarrage dudit automate IMA de protection.

10. Système de commutation redondante selon la revendication 9 dans lequel ledit numéro SCCI est retransmis à partir dudit automate IMA de travail vers ledit automate IMA de protection chaque fois que la valeur dudit numéro SCCI change.

11. Système de commutation redondante selon la revendication 9 dans lequel ledit numéro SCCI est retransmis à partir dudit automate IMA de travail vers ledit automate IMA de protection de manière périodique.

12. Système de commutation redondante selon la revendication 6 dans lequel ledit delta de numéro de séquence de trame est transmis à partir dudit automate IMA de travail vers ledit automate IMA de protection lors d'un démarrage dudit automate IMA de protection.

13. Système de commutation redondante selon la revendication 12 dans lequel ledit delta de numéro de séquence de trame est retransmis à partir dudit automate IMA de travail vers ledit automate IMA de protection chaque fois qu'une valeur moyenne dudit delta de numéro de séquence de trame change.

14. Système de commutation redondante selon la revendication 3 dans lequel :
un numéro SCCI de l'automate IMA de travail est transmis à l'automate IMA de protection sur la liaison de synchronisation IMA ;
un delta de numéro de séquence de trame est transmis à partir dudit automate IMA de travail audit automate IMA de protection sur ladite liaison de synchronisation IMA, dans lequel le delta de numéro de séquence de trame est déterminé en soustrayant d'un premier numéro de séquence de trame d'une trame générée par l'automate IMA de travail à un premier moment spécifique, un deuxième numéro de séquence de trame d'une trame provenant d'un automate IMA d'extrémité distante de l'extrémité distante de la liaison virtuelle IMA au premier moment spécifique ; et
ledit delta de numéro de séquence de trame est utilisé par ledit automate IMA de protection en ajoutant ledit delta de numéro de séquence de trame à un troisième numéro de séquence de trame d'une trame arrivant au niveau de l'automate IMA de protection à partir dudit automate IMA d'extrémité distante pour générer un quatrième numéro de séquence de trame, ledit quatrième numéro de séquence de trame étant destiné à être utilisé par ledit automate IMA de protection pour participer à ladite liaison virtuelle IMA après qu'une commutation redondante s'est produite ; dans lequel ledit automate IMA de protection est adapté, lors d'un démarrage dudit automate IMA de protection, pour entrer dans un état de travail lors de la réception d'une cellule ICP dans le flux de données IMA à partir de l'automate IMA d'extrémité distante dans lequel la cellule ICP indique que l'automate IMA d'extrémité distante est dans un état de travail.

15. Système de commutation redondante selon la revendication 14 dans lequel une paire redondante APS de cartes E/S est couplée entre l'extrémité proche et l'extrémité distante de la liaison virtuelle IMA pour fournir une protection de redondance de port.

16. Système de commutation redondante selon la revendication 15, comprenant en outre : un diviseur de transmission IMA pour dupliquer un flux de données IMA de sortie à partir de l'automate IMA de travail destiné à l'extrémité distante de ladite liaison virtuelle IMA, ledit diviseur de transmission IMA délivrant une copie dudit flux de données IMA de sortie à une carte E/S de travail et à une carte E/S de protection de ladite paire redondante de cartes E/S ;
un combineur de réception IMA ayant une première entrée couplée à ladite carte E/S de travail et une deuxième entrée couplée à ladite carte E/S de protection et une sortie couplée audit diviseur de réception IMA ; et
un commutateur IMA couplé à la première carte E/S et couplé à la deuxième carte E/S pour le couplage de ladite liaison virtuelle IMA à une carte parmi ladite première carte E/S et ladite deuxième carte E/S.

17. Procédé de commutation redondante pour une extrémité proche d'une liaison virtuelle IMA,
dans lequel un élément de réseau de travail est destiné à accueillir un automate IMA de travail et un élément de réseau de protection est destiné à accueillir un automate IMA de protection,
le procédé comprenant l'étape suivante :
faire commuter la participation à la liaison virtuelle IMA (305) entre ledit automate IMA de travail et ledit automate IMA de protection **caractérisé par** l'étape suivante
synchroniser, au moyen d'une liaison de synchronisation IMA (111) couplant ledit élément de réseau audit élément de réseau de protection pour communiquer des informations d'état se rapportant audit automate IMA de travail audit automate IMA de protection, l'automate IMA de protection (120, 122) devant participer à la liaison virtuelle IMA avec l'automate IMA de travail (110, 112) participant déjà à la liaison virtuelle IMA ; et
dans lequel la commutation se produit une fois que l'automate IMA de protection est synchronisée avec l'automate IMA de travail.

18. Procédé de commutation redondante selon la revendication 17 dans lequel l'étape de synchronisation comprend en outre l'étape suivante :
transmettre à partir dudit automate IMA de travail, des informations d'état se rapportant audit automate IMA de travail audit automate IMA de protection.

19. Procédé de commutation redondante selon la revendication 18 comprenant en outre les étapes suivantes :
dupliquer un flux de données IMA entrant sur ladite liaison virtuelle IMA à partir d'une extrémité distante de ladite liaison virtuelle IMA ;
délivrer une copie dudit flux de données IMA à l'automate IMA de travail et à l'automate IMA de protection ;
dupliquer un flux de données ATM destiné à la transmission sur ladite liaison virtuelle IMA vers une extrémité distante de ladite liaison virtuelle IMA ; et
délivrer une copie dudit flux de données ATM à l'automate IMA de travail et à l'automate IMA de protection.

20. Procédé de commutation redondante selon la revendication 19 dans lequel ledit automate IMA de protection et l'automate IMA de travail présentent des ID de liaison, des ID de groupe IMA et des décalages de cellules ICP pré-configurés qui correspondent.

21. Procédé de commutation redondante selon la revendication 19 dans lequel, les informations d'état se rapportant audit automate IMA de travail comprennent des ID de liaison, une ID de groupe IMA et des décalages de cellules ICP dudit automate IMA de travail.

22. Procédé de commutation redondante selon la revendication 18 dans lequel, les informations d'état se rapportant audit automate IMA de travail comprennent un numéro SCCI de l'automate IMA de travail.

23. Procédé de commutation redondante selon la revendication 22 dans lequel, les informations d'état se rapportant audit automate IMA de travail comprennent un delta de numéro de séquence de trame, ledit delta de numéro de séquence de trame étant destiné à être utilisé par ledit automate IMA de protection pour déterminer un numéro de séquence de trame à utiliser pour communiquer sur la liaison virtuelle IMA avec l'extrémité distante de la liaison virtuelle IMA.

24. Procédé de commutation redondante selon la revendication 23 comprenant en outre les étapes suivantes :
déterminer le delta de numéro de séquence de trame en soustrayant d'un premier numéro de séquence de trame d'une trame générée par l'automate IMA de travail à un premier moment spécifique, un deuxième numéro de séquence de trame d'une trame provenant d'un automate IMA d'extrémité distante de l'extrémité distante de la liaison virtuelle IMA au premier moment spécifique ; et
déterminer au niveau de l'automate IMA de protection, un quatrième numéro de séquence de trame en ajoutant ledit delta de numéro de séquence de trame à un troisième numéro de séquence de trame d'une trame arrivant au niveau de l'automate IMA de protection à partir dudit automate IMA d'extrémité distante, ledit quatrième numéro de séquence de trame étant destiné à être utilisé par ledit automate IMA de protection pour participer à ladite liaison virtuelle IMA après qu'une commutation redondante s'est produite.

25. Procédé de commutation redondante selon la revendication 18 comprenant en outre l'étape suivante :
faire entrer ledit automate IMA de protection dans un état de travail lors du démarrage de l'automate IMA de protection et lors de la réception d'une cellule ICP dans le flux de données IMA à partir de l'automate IMA d'extrémité distante à l'extrémité distante de la liaison virtuelle IMA dans lequel la cellule ICP indique que l'automate IMA d'extrémité distante est dans un état de travail.

26. Procédé de commutation redondante selon la revendication 22 comprenant en outre l'étape suivante :
la transmission dudit numéro SSCI s'effectue entre ledit automate IMA de travail et ledit automate IMA de protection lors d'un démarrage dudit automate IMA de protection.

27. Procédé de commutation redondante selon la revendication 26 comprenant en outre l'étape suivante :
la retransmission dudit numéro SCCI s'effectue entre ledit automate IMA de travail et ledit automate IMA de protection chaque fois que la valeur dudit numéro SCCI change.

28. Procédé de commutation redondante selon la revendication 26 comprenant en outre l'étape suivante :
la retransmission dudit numéro SCCI s'effectue entre ledit automate IMA de travail et ledit automate IMA de protection de manière périodique.

29. Procédé de commutation redondante selon la revendication 23 comprenant en outre l'étape suivante :
la transmission dudit delta de numéro de séquence de trame s'effectue entre ledit automate IMA de travail et ledit automate IMA de protection lors d'un démarrage dudit automate IMA de protection.

30. Procédé de commutation redondante selon la revendication 28 comprenant en outre l'étape suivante : la retransmission dudit delta de numéro de séquence de trame entre ledit automate IMA de travail et ledit automate IMA de protection chaque fois qu'une valeur moyenne dudit delta de numéro de séquence de trame change.

31. Procédé de commutation redondante selon la revendication 21 dans lequel les informations d'état se rapportant audit automate IMA de travail comprennent un numéro SCCI de l'automate IMA de travail et un delta de numéro de séquence de trame, le procédé comprenant en outre les étapes suivantes :
déterminer le delta de numéro de séquence de trame en soustrayant d'un premier numéro de séquence de trame d'une trame générée par l'automate IMA de travail à un premier moment spécifique, un deuxième numéro de séquence de trame d'une trame provenant d'un automate IMA d'extrémité distante de l'extrémité distante de la liaison virtuelle IMA au premier moment spécifique ;
déterminer au niveau de l'automate IMA de protection, un quatrième numéro de séquence de trame en ajoutant ledit delta de numéro de séquence de trame à un troisième numéro de séquence de trame d'une trame arrivant au niveau de l'automate IMA de protection à partir dudit automate IMA d'extrémité distante, ledit quatrième numéro de séquence de trame étant destiné à être utilisé par ledit automate IMA de protection pour participer à ladite liaison virtuelle IMA après qu'une commutation redondante s'est produite ; et
faire entrer ledit automate IMA de protection dans un état de travail lors du démarrage de l'automate IMA de protection et lors de la réception d'une cellule ICP dans le flux de données IMA à partir de l'automate IMA d'extrémité distante dans lequel la cellule ICP indique que l'automate IMA d'extrémité distante est dans un état de travail.
